# EUROPÄISCHE PATENTSCHRIFT

(11) **EP 2 697 524 B1**
(45) Veröffentlichungstag und Bekanntmachung des Hinweises auf die Patenterteilung: **13.04.2016**
(21) Anmeldenummer: 12750526.1
(22) Anmeldetag: 03.08.2012
(51) Int. Cl.: F16L 37/091

(54) **FLUIDTECHNISCHE BAUGRUPPE MIT RINGFÖRMIGEM VERANKERUNGSELEMENT**
FLUID ENGINEERING ASSEMBLY EQUIPPED WITH ANNULAR ANCHORING ELEMENT
ENSEMBLE DE CONDUITE DES FLUIDES ÉQUIPÉ D'ÉLÉMENT DE FIXATION ANNULAIRE

(30) Priorität: 08.08.2011 DE 102011109787
(43) Veröffentlichungstag der Anmeldung: 19.02.2014
(73) Patentinhaber: Festo AG & Co. KG, 73734 Esslingen (DE)
(72) Erfinder: DECKER, Andreas, 73730 Esslingen (DE); GÖTZ, Florian, 73249 Wernau (DE); FISCHLE, Dominique, 4500 Solothurn (CH)
(74) Vertreter: Patentanwälte Magenbauer & Kollegen Partnerschaft mbB
(86) Internationale Anmeldenummer: PCT/EP2012/003313
(87) Internationale Veröffentlichungsnummer: WO 2013/020680

(56) Entgegenhaltungen:
- FR-A1- 2 873 185
- GB-A- 2 232 217
- GB-A- 2 238 592

## Beschreibung

Die Erfindung betrifft eine fluidtechnische Baugruppe mit mindestens einer Montagebaugruppe bestehend aus einem in einer Öffnung eines Fluidkanals eines zweiten Bauteils der fluidtechnischen Baugruppe fixierbaren ersten Bauteil und einem an dem ersten Bauteil fixierten, durch Einpressen in der Öffnung des Fluidkanals verankerbaren ringförmigen Verankerungselement, das über einen sich konzentrisch um eine Mittellängsachse herum erstreckenden und in sich geschlossenen Ringkörper verfügt, der einen zentralen Ringabschnitt mit zwei einander axial entgegengesetzt orientierten und die maximale axiale Höhe des Ringkörpers definierenden ersten und zweiten Stirnflächen sowie einen radial außen an dem zentralen Ringabschnitt radial abstehend angeordneten und sich in dem zwischen den beiden Stirnflächen liegenden Bereich um den zentralen Ringabschnitt herum erstreckenden Verankerungszahn mit zwei zueinander schrägen ersten und zweiten Zahnflanken aufweist.

Die DE 10162657 B4 offenbart eine fluidtechnische Baugruppe in einer Ausgestaltung als Anschlussvorrichtung, die ein lösbares Anschließen einer insbesondere als Schlauch ausgebildeten Fluidleitung gestattet. Die Anschlussvorrichtung verfügt über ein erstes Bauteil in Gestalt eines Anschlussstücks, das zusammen mit einem als Befestigungsring bezeichneten ringförmigen Verankerungselement zu einer Montagebaugruppe zusammengefasst ist, wobei diese Montagebaugruppe mittels des ringförmigen Verankerungselementes in der Öffnung eines Fluidkanals fixierbar ist, der in einem vom Gehäuse eines fluidtechnischen Gerätes gebildeten zweiten Bauteil ausgebildet ist. Das ringförmige Verankerungselement ist in die Öffnung des Fluidkanals einpressbar und verankert sich dabei mittels eines an ihrem Außenumfang angeordneten Verankerungszahns formschlüssig in der Wandung des Fluidkanals. Das ringförmige Verankerungselement selbst verfügt über einen Ringkörper mit einem eine relativ große axiale Höhe aufweisenden und hülsenartig ausgebildeten zentralen Ringabschnitt, an dessen Außenumfang der wesentlich schmälere Verankerungszahn angeformt ist. Zwischen dem Verankerungszahn und den beiden einander entgegengesetzten axialen Stirnflächen des zentralen Ringabschnittes erstrecken sich jeweils kreiszylindrische Mantelflächen des zentralen Ringabschnittes, sodass zwischen den beiden Stirnflächen und dem Verankerungszahn jeweils ein relativ großer axialer Absatz vorhanden ist. Aufgrund der geschilderten Ausgestaltung ist das bekannte ringförmige Verankerungselement relativ teuer in der Herstellung und beansprucht darüber hinaus relativ viel Platz, so dass es schwierig ist, kleine Baugrößen der Montagebaugruppe zu realisieren.

Aus der DE 10 2005 017 692 B3 ist eine ebenfalls als Anschlussvorrichtung konzipierte fluidtechnische Baugruppe bekannt, die über ein einstückiges, ring- oder hülsenförmiges Käfigelement verfügt, das mehrere zur Fixierung einer eingesteckten Fluidleitung dienende Krallenelemente aufweist. Das Käfigelement ist zusammen mit einem Verankerungsring zu einer Montagebaugruppe zusammengefasst, die sich durch Einpressen in einer Aufnahmevertiefung eines Trägerbauteils fixieren lässt. Der Verankerungsring ist als Stanzbiegeteil herstellbar und kann mittels an ihm ausgebildeter Verbindungslaschen an dem Käfigelement fixiert werden. An einer Stirnseite ist der Verankerungsring derart axial abgebogen, dass ein radial außen liegender, bevorzugt scharfkantiger ringförmiger Verankerungsvorsprung ausgebildet wird, der sich in die Wandung der Aufnahmevertiefung des Trägerbauteils eindrücken lässt. Aus der DE 10207359 C1 geht ein als Metallhaken bezeichnetes ringförmiges Verankerungselement hervor, das einen in sich geschlossener Ringkörper aufweist, der sich aus einem zentralen Ringabschnitt und mehreren entlang des Umfanges des Ringabschnittes verteilten und nach außen ragenden Vorsprüngen zusammensetzt. Die Vorsprünge enthalten eine Gruppe horizontaler Vorsprünge und eine Gruppe schräger Vorsprünge. Die schrägen Vorsprünge sind bezüglich des Ringabschnittes abgebogen und ragen an einer Stirnseite über den Ringabschnitt hinaus, sodass die maximale axiale Höhe des Ringkörpers gemeinsam von der Höhe des Ringabschnittes und dem diesbezüglichen axialen Überstand der schrägen Vorsprünge definiert wird.

Aus der GB 2 238 592 A ist eine mit einer konischen Abschrägung versehene Befestigungsmutter bekannt, die auf eine Welle aufschraubbar ist, um diese Welle an einem Lager zu fixieren. Die GB 2 232 217 A beschreibt eine Schraubverbindung, bei der zwei Ringscheiben als Bestandteile einer Unterlegscheibe verwendet werden, die zwischen einer Mutter und einem anderen Bauteil eingespannt ist.

Aus der FR 2 873 185 A1 ist eine gattungsbildende fluidtechnische Baugruppe bekannt, die mittels eines konisch verformten Verankerungsringes in einer Gehäuseöffnung fixierbar ist.

Der Erfindung liegt die Aufgabe zugrunde, Maßnahmen vorzuschlagen, die bei einer fluidtechnischen Baugruppe ein einfaches, kostengünstiges und platzsparendes Fixieren eines ersten Bauteils in einer Öffnung eines Fluidkanals eines zweiten Bauteils ermöglichen.

Zur Lösung dieser Aufgabe ist vorgesehen, dass das ringförmige Verankerungselement als flache Ringscheibe ausgebildet ist, wobei sich die erste Zahnflanke des Verankerungszahns über einen Knick absatzlos direkt an die erste Stirnfläche des zentralen Ringabschnittes anschließt.

Das ringförmige Verankerungselement zeichnet sich durch eine Ausgestaltung als flache Ringscheibe aus, deren maximale axiale Höhe durch den Abstand zwischen den beiden Stirnflächen des zentralen Ringabschnittes definiert wird, wobei zwischen der ersten Stirnfläche des zentralen Ringabschnittes und der ersten Zahnflanke kein Absatz ausgebildet ist beziehungsweise kein sich dazwischen erstreckender kreiszylindrischer Mantelabschnitt vorgesehen ist. Mithin kann das Verankerungselement sehr kostengünstig mit extrem niedriger Bauhöhe realisiert werden, was es für vielfältige Verankerungsmaßnahmen im Bereich fluidtechnischer Baugruppen prädestiniert. Beim Einpressen des ringförmigen Verankerungselementes in die Öffnung eines Fluidkanals kann der Verankerungszahn in die die Öffnung des Fluidkanals begrenzende Wandung eindringen und eine sichere formschlüssige Fixierung herbeiführen. Aufgrund der flachen Gestalt können mittels des ringförmigen Verankerungselementes auch sehr kurzbauende erste Bauteile problemlos fixiert werden.

Zu der fluidtechnischen Baugruppe gehört nicht nur die das erste Bauteil und das ringförmige Verankerungselement enthaltende Montagebaugruppe, sondern auch noch das mit dem ersten Bauteil zu bestückende zweite Bauteil, bei dem es sich beispielsweise um das Gehäuse eines fluidtechnischen Gerätes handelt, zum Beispiel um ein Ventilgehäuse oder um ein Gehäuse eines fluidbetätigten Antriebes. Das zweite Bauteil besteht zweckmäßigerweise zumindest im Bereich der Öffnung des Fluidkanals aus einem Kunststoffmaterial. Der Durchmesser der Öffnung des Fluidkanals ist kleiner als der im Bereich der Verankerungszone des Verankerungszahns gemessene Außendurchmesser des Verankerungselementes, so dass sich der Verankerungszahn beim Einpressen in den Fluidkanal in dessen Wandung eindrücken und formschlüssig sicher verankern kann.

Vorteilhafte Weiterbildungen der Erfindung gehen aus den Unteransprüchen hervor.

Unter anderem aus herstellungstechnischer Sicht ist es von Vorteil, wenn sich die beiden Stirnflächen des zentralen Ringabschnittes jeweils in einer bezüglich der Mittellängsachse rechtwinkeligen Radialebene erstrecken. Dies begünstigt insbesondere eine Stanzherstellung der Ringscheibe aus einem plattenförmigen Ausgangsmaterial mit gleichförmiger Materialdicke.

Der zwischen der ersten Stirnfläche des zentralen Ringabschnittes und der ersten Zahnflanke eingeschlossene Winkel beträgt, an der Innenseite beziehungsweise an der der zweiten Stirnfläche zugewandten Seite gemessen, zweckmäßigerweise je einschließlich zwischen 100° und 140°. Als besonders vorteilhaft hat sich ein Winkel im Bereich von 120° erwiesen.

Hinsichtlich der zweiten Zahnflanke des Verankerungszahns ist es vorteilhaft, wenn sie sich absatzlos direkt an die zweite Stirnfläche des zentralen Ringabschnittes anschließt. Auf diese Weise schließen sich beide Zahnflanken jeweils absatzlos direkt an jeweils eine der beiden Stirnflächen an.

Eine zweckmäßige Ausgestaltung des ringförmigen Verankerungselementes sieht vor, dass sich die zweite Zahnflanke sowohl absatzlos als auch knicklos direkt an die zweite Stirnfläche des zentralen Ringabschnittes anschließt. Wenn, was von Vorteil ist, die zweite Stirnfläche sich in einer zur Mittellängsachse des Ringkörpers rechtwinkeligen Radialebene erstreckt, bildet somit die zweite Zahnflanke eine unmittelbare geradlinige Verlängerung dieser zweiten Stirnfläche mit einer erstreckungsgleichen Radialebene wie die zweite Stirnfläche.

Eine hierzu alternative Gestaltung sieht vor, dass sich die zweite Zahnflanke des Verankerungszahns zwar absatzlos, jedoch über einen Knick direkt an die zweite Stirnfläche des zentralen Ringabschnittes anschließt. Während die erste Zahnflanke ausgehend von der ersten Stirnfläche in Richtung zur zweiten Stirnfläche abgeknickt ist, ist die zweite Zahnflanke anschließend an die zweite Stirnfläche in Richtung zur ersten Stirnfläche abgeknickt, so dass weiterhin die maximale axiale Höhe des Ringkörpers durch den Abstand zwischen den beiden axialen Stirnflächen des zentralen Ringabschnittes definiert wird und der Verankerungszahn in dem axial zwischen den beiden Stirnflächen liegenden Bereich ausgebildet ist.

Durch den Knick im Übergangsbereich zwischen der zweiten Stirnfläche und der zweiten Zahnflanke ist sichergestellt, dass die zur Verankerung dienende, radial außen liegende Verankerungszone des Verankerungszahns die zweite Stirnfläche nicht axial überragt. In diesem Zusammenhang kann die zweite Zahnflanke insbesondere als Schrägfläche durch einen Prägevorgang hergestellt werden.

Der an der Innenseite, also an der zur ersten Stirnfläche weisenden Seite gemessene Winkel zwischen der zweiten Stirnfläche und der zweiten Zahnflanke ist vorzugsweise größer als der weiter oben definierte Winkel zwischen der ersten Stirnfläche und der ersten Zahnflanke. Vorzugsweise liegt er je einschließlich zwischen 175° und 150° und dabei insbesondere im Bereich von 170°.

Die den Verankerungszahn radial außen abschließende, sich um die Mittellängsachse herum erstreckende Verankerungszone kann in der Form einer scharfkantigen Verankerungskante ausgebildet sein. Sie ergibt sich hierbei insbesondere im Bereich des Aufeinandertreffens der beiden schräg zueinander verlaufenden Zahnflanken. Eine solche scharfe Verankerungskante ist unabhängig davon realisierbar, ob sich die sich absatzlos an die zweite Stirnfläche anschließende zweite Zahnflanke nun mit Knick oder ohne Knick direkt an die zweite Stirnfläche anschließt.

Eine andere Ausgestaltung des Verankerungszahns sieht vor, dass er in seiner radial außen liegenden Verankerungszone eine zur Mittellängsachse des Ringkörpers konzentrische kreiszylindrische Randfläche aufweist, an die sich axial beidseits jeweils eine der beiden Zahnflanken anschließt. Auch hier ist es von Vorteil, wenn die zweite Zahnflanke absatzlos direkt in die zweite Stirnfläche übergeht, wobei der Übergang geradlinig oder über einen Knick stattfinden kann. Die in Achsrichtung der Mittellängsachse gemessene Höhe (h) der Randfläche des Verankerungszahns ist kleiner und zweckmäßigerweise erheblich kleiner als die entsprechend gemessene Höhe (H) des zentralen Ringabschnittes. Es ist von Vorteil, wenn die Höhe (h) der Randfläche des Verankerungszahns maximal 0,05 mm beträgt. Ebenso ist es vorteilhaft, wenn die Höhe (h) der Randfläche des Verankerungszahns maximal 20 % der zwischen den beiden Stirnflächen gemessenen Höhe (H) des zentralen Ringabschnittes beträgt.

Was das Verhältnis zwischen der Höhe (H) des zentralen Ringabschnittes und des im Bereich der Verankerungszone des Verankerungszahns gemessenen Außendurchmessers des Ringkörpers betrifft, beträgt die vorgenannte Höhe (H) vorzugsweise maximal 20 % des Außendurchmessers (D_{A})des Ringkörpers.

Für den Verankerungszahn sind unterschiedliche Gestaltungen denkbar. Besonders vorteilhaft ist ein in sich geschlossener Längsverlauf um die Mittellängsachse herum, so dass sich eine ununterbrochene Verankerungszone zum Zusammenwirken mit dem zweiten Bauteil ergibt. Eine alternative Bauform sieht vor, dass der Verankerungszahn in seiner Längsrichtung um die Mittellängsachse herum mehrfach unterbrochen ist, so dass sich in der Umfangsrichtung der Mittellängsachse zueinander beabstandete Zahnsegmente ergeben. Letzteres ist insbesondere auch aus herstellungstechnischer Sicht von Vorteil, wobei die Unterbrechungsbereiche ausgestanzte Bereiche sein können, an denen bis zu Endverarbeitung des Verankerungselementes Haltestege an dem ringförmigen Verankerungselement angeformt waren, die das Verankerungselement im Ausgangsmaterial festgehalten haben.

Insgesamt ist das als flache Ringscheibe ausgebildete ringförmige Verankerungselement in vorteilhafter Weise durch einen Stanzvorgang herstellbar. Zur wunschgemäßen Ausformung der Verankerungszone kann der Stanzvorgang mit einem Prägevorgang kombiniert werden. Als Material für das ringförmige Verankerungselement empfiehlt sich vor allem Metall und hierbei insbesondere Edelstahl.

Mit Hilfe des als flache Ringscheibe ausgebildeten ringförmigen Verankerungselementes können erste Bauteile unterschiedlichster Art in Öffnungen von Fluidkanälen weiterer Bauteile durch Einpressen sicher fixiert werden. Nur beispielhaft seien an dieser Stelle zum Anschließen von Fluidleitungen dienende Anschlussstücke, zum Verschließen von Fluidkanälen dienende Blindstopfen, zur Drosselung einer Fluidströmung dienende Drosseleinsätze oder zur Druckerfassung und/oder Druckanzeige geeignete Manometer genannt.

Nachfolgend wird die Erfindung anhand der beiliegenden Zeichnung näher erläutert. In dieser zeigen:
- Figur 1: in perspektivischer Darstellung eine bevorzugte Ausführungsform einer erfindungsgemäßen fluidtechnischen Baugruppe, die mit einer ebenfalls bevorzugten Ausgestaltung eines als flache Ringscheibe konzipierten ringförmigen Verankerungselementes ausgestattet ist,
- Figur 2: die Anordnung aus Figur 1 im Längsschnitt,
- Figur 3: die Anordnung aus Figur 1 vor der Montage einer aus einem ersten Bauteil und dem ringförmigen Verankerungselement bestehenden Montagebaugruppe in einem zweiten Bauteil,
- Figur 4: einen Querschnitt der Anordnung aus Figuren 1 bis 3 gemäß Schnittlinie IV-IV aus Figur 2, wobei das oberhalb der Schnittebene liegende ringförmige Verankerungselement gestrichelt angedeutet ist,
- Figur 5: das in der fluidtechnischen Baugruppe gemäß Figuren 1 bis 4 integrierte ringförmige Verankerungselement mit Blick gemäß Pfeil V-V aus Figur 6 auf die erste Stirnfläche,
- Figur 6: einen Querschnitt des ringförmigen Verankerungselementes gemäß Schnittlinie VI-VI aus Figur 5,
- Figur 7: den in Figur 6 strichpunktiert umrahmten Ausschnitt VII des Ringkörpers des ringförmigen Verankerungselementes in einer vergrößerten Darstellung,
- Figur 8: eine alternative Bauform des ringförmigen Verankerungselementes in einer Einzeldarstellung analog Figur 5 und mit Blick auf die erste Stirnfläche gemäß Pfeil VIII aus Figur 9,
- Figur 9: einen Querschnitt durch das ringförmige Verankerungselement aus Figur 8 gemäß Schnittlinie IX-IX,
- Figur 10: den in Figur 9 strichpunktiert umrahmten Ausschnitt des Ringkörpers in einer vergrößerten Darstellung,
- Figur 11: eine weitere Ausführungsform des ringförmigen Verankerungselementes in einer Einzeldarstellung und mit Blick auf die erste Stirnfläche gemäß Pfeil XI aus Figur 12,
- Figur 12: einen Querschnitt durch das ringförmige Verankerungselement gemäß Schnittlinie XII-XII aus Figur 11,
- Figur 13: den in Figur 12 strichpunktiert umrahmten Ausschnitt XIII des Ringkörpers in einer vergrößerten Darstellung,
- Figur 14: eine Einzeldarstellung einer im Rahmen der Erfindung realisierbaren fluidtechnischen Baugruppe, deren mittels eines ringförmigen Verankerungselementes zu fixierendes erstes Bauteil ein Blindstopfen ist, das Ganze vor der Montage der Montagebaugruppe in perspektivischer Darstellung,
- Figur 15: die Anordnung aus Figur 14 im zusammengebauten Zustand im Längsschnitt,
- Figur 16: eine weitere Ausführungsform einer fluidtechnischen Baugruppe, deren Montagebaugruppe als erstes Bauteil einen Drosseleinsatz aufweist, das Ganze wiederum in perspektivischer Darstellung vor der Montage der Montagebaugruppe,
- Figur 17: die Anordnung aus Figur 16 im Längsschnitt im zusammengebauten Zustand,
- Figur 18: eine weitere mögliche Ausführungsform einer fluidtechnischen Baugruppe der erfindungsgemäßen Art, bei der das erste Bauteil als Manometer ausgebildet ist, wiederum vor dem Zusammenbau in einer perspektivischen Darstellung, und
- Figur 19: die Anordnung aus Figur 18 im zusammengebauten Zustand und teilweise im Längsschnitt.

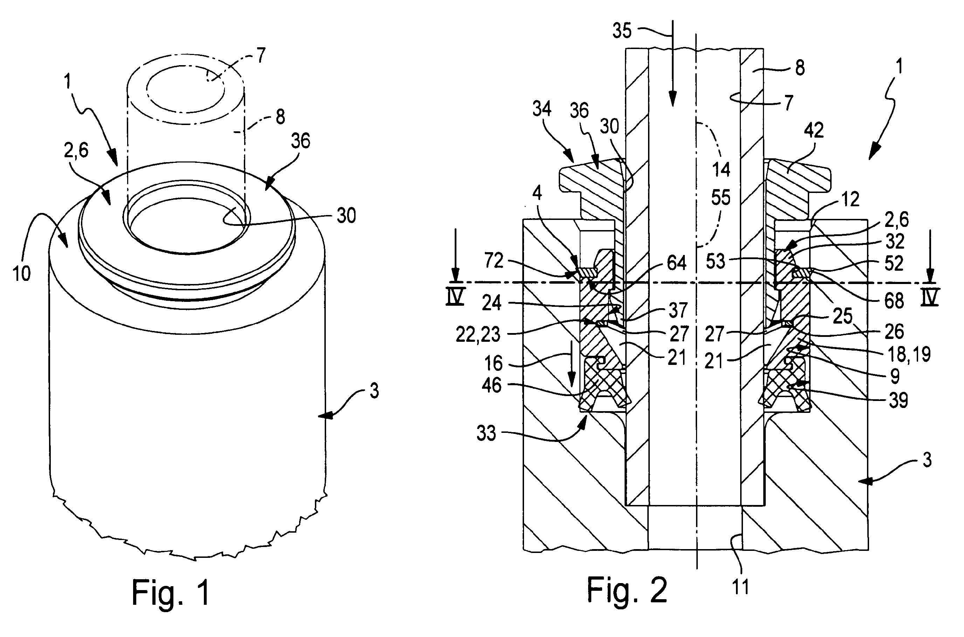

Die Figuren 1 bis 4 zeigen eine fluidtechnische Baugruppe 1 bestehend aus einem ersten Bauteil 2, einem zweiten Bauteil 3 und einem als flache Ringscheibe ausgebildeten ringförmigen Verankerungselement 4, wobei das erste Bauteil 2 und das ringförmige Verankerungselement 4 zu einer als Montagebaugruppe 5 bezeichneten Baugruppe zusammengefasst sind.

Die Montagebaugruppe 5 ist eine Baueinheit und bildet quasi eine Unterbaugruppe der fluidtechnischen Baugruppe 1.

Bei dem ersten Bauteil 2 handelt es sich exemplarisch um ein ein Anschließen einer Fluidleitung ermöglichendes Anschlussstück 6. Sein Aufbau und seine Funktionsweise werden im Folgenden noch näher erläutert.

Bei dem zweiten Bauteil 3 handelt es sich insbesondere um eine nur ausschnittsweise abgebildete Komponente eines fluidtechnischen Gerätes, beispielsweise um das Gehäuse eines Ventils oder eines mittels Fluidkraft betätigbaren Antriebes. Insbesondere wenn das erste Bauteil 2 ein Anschlussstück 6 ist, kann das zweite Bauteil 3 auch als Gehäuse einer individuellen Anschlussvorrichtung ausgebildet sein, die sich an einem fluidtechnischen Gerät befestigen lässt.

In dem zweiten Bauteil 3 ist mindestens ein Fluidkanal 11 ausgebildet, der mit einer im Folgenden als Kanalmündung 12 bezeichneten Mündung zu einer Außenfläche 10 des zweiten Bauteils 3 hin ausmündet. Die Kanalmündung 12 gehört zu einer in dem zweiten Bauteil 3 ausgebildeten und im Folgenden in der Regel als "Aufnahmevertiefung 9" bezeichneten Öffnung 9, die den der Kanalmündung 12 zugeordneten Endabschnitt des Fluidkanals 11 bildet und die zweckmäßigerweise über einen runden und vorzugsweise über einen kreisrunden Querschnitt verfügt.

Die Montagebaugruppe 5 hat eine Längsachse 14 und ist durch die Kanalmündung 12 hindurch in die Aufnahmevertiefung 9 einsteckbar oder eingesteckt. Mit Hilfe des ringförmigen Verankerungselementes 4 ist die eingesteckte Montagebaugruppe 5 in der Aufnahmevertiefung 9 axial unbeweglich verankert und an einer neuerlichen Entnahme gehindert. Das Befestigungskonzept basiert auf einem Einpressen des ringförmigen Verankerungselementes 4 in die Aufnahmevertiefung 9, wobei das erste Bauteil 2 an dem ringförmigen Verankerungselement 4 gehalten ist. Bei allen Ausführungsbeispielen verfügt das erste Bauteil über einen Grundkörper 19, der den Verankerungsring 4 trägt.

Mit Hilfe des als Anschlussstück 6 ausgebildeten ersten Bauteils 2 lässt sich eine Fluidleitung 8 lösbar anschließen, um einen in ihr ausgebildeten Leitungskanal 7 mit dem sich im zweiten Bauteil 3 erstreckenden Fluidkanal 11 zu verbinden.

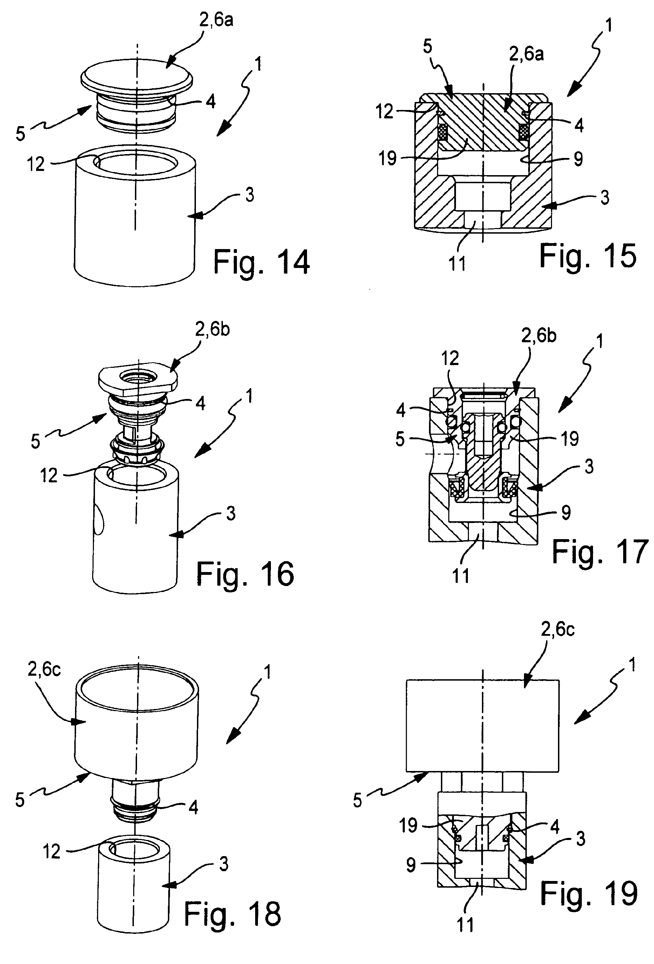

Die Figuren 14 bis 19 illustrieren einige alternative Ausführungsformen einer fluidtechnischen Baugruppe 1, die wiederum eine Montagebaugruppe 5 bestehend aus einem ersten Bauteil 2 mit Grundkörper 19 und einem daran fixierten ringförmigen Verankerungselement 4 sowie ein zur Bestückung mit der Montagebaugruppe 5 vorgesehenes zweites Bauteil 3 enthält.

Bei dem in Figuren 14 und 15 illustrierten Ausführungsbeispiel einer fluidtechnischen Baugruppe 1 ist das erste Bauteil 2 als Blindstopfen 6a konzipiert, der im in der Aufnahmevertiefung 9 montierten Zustand der Montagebaugruppe 5 den Fluidkanal 11 dicht verschließt. Es handelt sich also insbesondere um einen einfachen Verschlusskörper.

Beim Ausführungsbeispiel der Figuren 16 und 17 ist das erste Bauteil 2 von einem Drosseleinsatz 6b gebildet, der in der Lage ist, die Strömung eines durch den Fluidkanal 11 hindurchströmenden Fluides zu drosseln. Auf diese Weise kann der Volumenstrom beeinflusst werden. Bei einer solchen Ausgestaltung ist die Aufnahmevertiefung 9 zweckmäßigerweise nicht als Endabschnitt des Fluidkanals 11 konzipiert, sondern als ein in den Verlauf des Fluidkanals 11 eingeschalteter Zwischenabschnitt.

Das in Figuren 18 und 19 gezeigte Ausführungsbeispiel illustriert ein als Manometer 6c konzipiertes erstes Bauteil 2, das im in der Aufnahmevertiefung 9 montierten Zustand in der Lage ist, den im Fluidkanal 11 herrschenden Fluiddruck zu messen und anzuzeigen.

Die weitere Beschreibung wird sich an der Ausführungsform der Figuren 1 bis 4 orientieren, wobei die hier bezüglich des ringförmigen Verankerungselementes 4 gemachten Erläuterungen in entsprechender Weise für die in Figuren 14 bis 19 illustrierten Ausführungsbeispiele und auch für anderweitige Anwendungsmöglichkeiten gelten.

Gemäß Figuren 1 bis 4 hat das hier als Anschlussstück 6 konzipierte erste Bauteil 2 einen Grundkörper 19, der als ring- oder hülsenförmig gestaltetes Gehäuse 18 ausgebildet ist, das radial außen einen axial durchgehenden Gehäuse-Innenraum 21 begrenzt.

Das Gehäuse 18 umschließt eine bevorzugt ring- oder hülsenförmig ausgebildete Halteeinrichtung 22, die exemplarisch von einem insgesamt über federelastische Eigenschaften verfügenden und insbesondere aus einem Federstahl bestehenden Haltering 23 gebildet ist. Der Haltering 23 ist von dem Gehäuse 18 konzentrisch umschlossen.

An seiner nach radial innen orientierten Innenumfangsfläche 24 ist das im Querschnitt ringförmige Gehäuse 18 mit einer konzentrisch angeordneten und nach radial innen hin offenen Aufnahmenut 25 versehen. In diese Aufnahmenut 25 greift der Haltering 23 mit seinem radial außen angeordneten äußeren Randabschnitt 26 ein, so dass er an diesem äußeren Randabschnitt 26 bezüglich des Gehäuses 18 axial unverschieblich fixiert ist.

Der Haltering 23 verfügt über mehrere in seiner Umfangsrichtung verteilt angeordnete und radial nach innen ragende Haltevorsprünge 27. Selbige haben zweckmäßigerweise eine leichte Schrägstellung, wobei sie sich zu ihren dem äußeren Randabschnitt 26 entgegengesetzten freien Enden hin schräg nach radial innen und zugleich nach axial innen in die Aufnahmevertiefung 9 hinein erstrecken. Vorzugsweise sind die Haltevorsprünge 27 krallenartig konfiguriert und in der axialen Richtung des Halteringes 23 federelastisch biegbar.

Besonders zweckmäßig ist es, wenn der Haltering 23 in seiner Umfangsrichtung über eine Mäanderstruktur verfügt. Hierbei kann auch der äußere Randabschnitt 26 unter Bildung einzelner, in der Umfangsrichtung des Halteringes 23 mit Abstand aufeinanderfolgender Randabschnitte unterbrochen sein.

Die bevorzugt als Haltering 23 ausgebildete Halteeinrichtung 22 wird von dem diesbezüglich insbesondere als separate Struktur ausgebildeten Gehäuse 18 in der durch einen Doppelpfeil angedeuteten Umfangsrichtung 28 des Gehäuses 18 konzentrisch umschlossen und dabei derart axial unbeweglich festgehalten, dass die Haltevorsprünge 27 federelastisch verformbar und auslenkbar sind.

Das erste Bauteil 2 hat eine axial orientierte Vorderseite 33 und eine diesbezüglich axial entgegengesetzt orientierte Rückseite 34. Im in der Aufnahmevertiefung 9 montierten Zustand weist die Vorderseite 33 axial ins Innere des Fluidkanals 11 hinein.

Das erste Bauteil 2 verfügt in seiner Ausgestaltung als Anschlussstück 6 zweckmäßigerweise über einen Dichtungsring 46, der im Bereich der Vorderseite 33 angeordnet und zweckmäßigerweise in koaxialer Anordnung vorne an dem Gehäuse 18 befestigt ist.

Das als Anschlussstück 6 ausgebildete erste Bauteil 2 enthält als weitere Komponente zweckmäßigerweise ein ring- oder hülsenartig ausgebildetes und eine axiale Durchgangsöffnung 30 umschließendes Löseelement 36. Das Löseelement 36 greift von der Rückseite 34 her axial in den Gehäuse-Innenraum 21 des ringförmigen Gehäuses 18 hinein, so dass es mit einem Drückabschnitt 37 axial unmittelbar hinter den Haltevorsprüngen 27 zu liegen kommt. Ein Betätigungsabschnitt 42 des Löseelements 36 ragt im Bereich der Rückseite 34 aus dem Gehäuse 18 heraus und steht im in der Aufnahmevertiefung 9 montierten Zustand des ersten Bauteils 2 nach außen über die Außenfläche 10 vor.

Das ringförmige Verankerungselement 4 ist an dem ersten Bauteil 2 koaxial angeordnet, und zwar insbesondere derart, dass es das erste Bauteil 2 koaxial umschließt. In der Ausgestaltung als Anschlussstück 6 ist das Verankerungselement 4 in einer das Gehäuse 18 radial außen konzentrisch umschließenden Weise am Anschlussstück 6 fixiert. Das ringförmige Verankerungselement 4 ist insbesondere an dem Gehäuse 18 axial unbeweglich befestigt. Somit bildet das ringförmige Verankerungselement 4 zusammen mit dem ersten Bauteil 2 die Montagebaugruppe 5.

Um die fluidtechnische Baugruppe 1 zusammenzusetzen, ist die Montagebaugruppe 5 mit bezüglich der Aufnahmevertiefung 9 koaxialer Ausrichtung in einer Montagerichtung 16 durch die Kanalmündung 12 hindurch in die Aufnahmevertiefung 9 einsetzbar. Im montierten Zustand fällt die Längsachse 14 der Montagebaugruppe 5 mit der Längsachse 17 der Aufnahmevertiefung 9 beziehungsweise der Kanalmündung 12 zusammen.

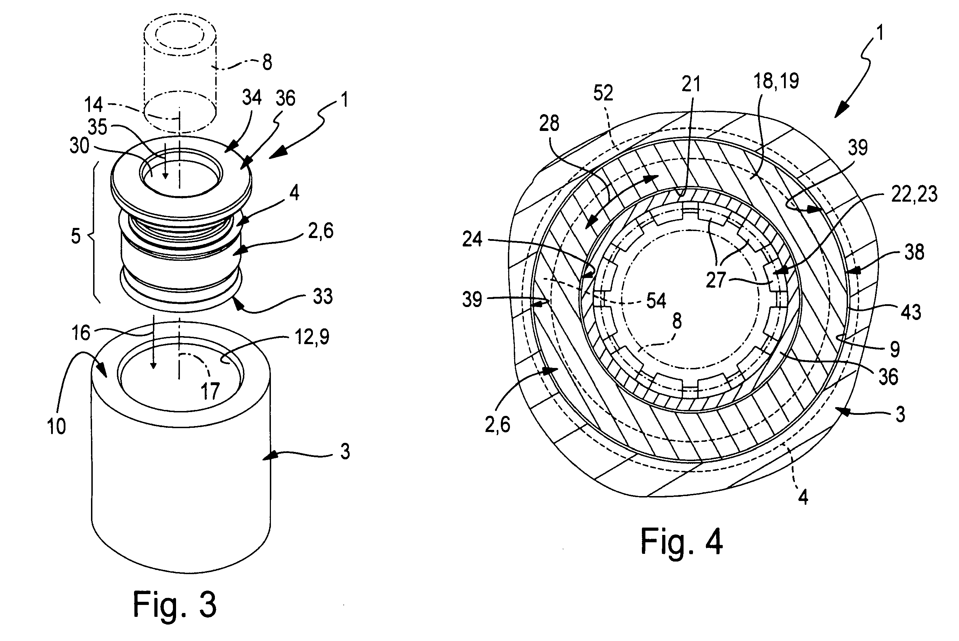

Das erste Bauteil 2 hat eine auf die Innenkontur der Aufnahmevertiefung 9 abgestimmte Außenkontur und ist zweckmäßigerweise kreisförmig profiliert. Vorzugsweise ist der Außenumfang des Gehäuses 18 wenigstens über einen gewissen Längenabschnitt hinweg kreiszylindrisch gestaltet. Bei montiertem erstem Bauteil 2 sitzt das Gehäuse 18 vorzugsweise über seine gesamte Länge hinweg im Innern der Aufnahmevertiefung 9. Weiter vorteilhaft ist es, wenn das erste Bauteil 2 und die Aufnahmevertiefung 9 derart aufeinander abgestimmt sind, dass im montierten Zustand der Montagebaugruppe 5 zwischen der nach radial außen orientierten Außenumfangsfläche des ersten Bauteils 2 beziehungsweise des Gehäuses 18 und der die Aufnahmevertiefung 9 peripher begrenzenden Innenumfangsfläche 39 ein aus Figur 4 ersichtlicher geringfügiger radialer Ringspalt 43 vorliegt.

Mit Hilfe des ringförmigen Verankerungselementes 4 lässt sich die Montagebaugruppe 5 sehr einfach dadurch in dem zweiten Bauteil 2 verankern, dass sie in der Montagerichtung 16 in die Aufnahmevertiefung 9 eingepresst wird. Das ringförmige Verankerungselement 4 ragt im an dem ersten Bauteil 2 montierten Zustand mit einer radial nach außen orientierten Verankerungszone 52 radial über die Außenumfangsfläche 38 des ersten Bauteils 2 beziehungsweise des gegebenenfalls vorhandenen Gehäuses 18 hinaus und steht mithin über diese Außenumfangsfläche 38 in radialer Richtung vor.

Das ringförmige Verankerungselement 4 hat im Bereich der Verankerungszone 52 einen Außendurchmesser D_{A}, der größer ist als der Innendurchmesser der Aufnahmevertiefung 9. Wird nun die Montagebaugruppe 5 axial in die Aufnahmevertiefung 9 eingepresst, gleitet das Verankerungselement 4 an der Innenumfangsfläche 39 entlang und drückt letztlich mit der Verankerungszone 52 in die die Aufnahmevertiefung 9 umschließende Wandung des zweiten Bauteils 3 ein. Dadurch wird das Verankerungselement 4 in dem zweiten Bauteil 3 kraft- und formschlüssig verankert. Da das Anschlussstück 6 an dem Verankerungselement 4 befestigt ist, ergibt sich somit eine gleichzeitige Fixierung des ersten Bauteils 2 bezüglich des zweiten Bauteils 3.

Im derart montierten Zustand eines als Anschlussstück 6 ausgebildeten ersten Bauteils 2 kann die Fluidleitung 8 sehr leicht durch Steckmontage lösbar angeschlossen werden. Sie ist hierzu lediglich in einer mit der Montagerichtung 16 zusammenfallenden Einsteckrichtung 35 von vorne her durch das Löseelement 36 hindurch zumindest so weit in das Anschlussstück 6 einzustecken, dass sie den Haltering 23 und den sich daran anschließenden Dichtungsring 46 durchsetzt. Beim Hindurchtreten der Fluidleitung 8 durch den Haltering 23 werden dessen Haltevorsprünge 27 radial nach außen verformt und aufgrund der sich hierbei aufbauenden Rückstellkraft von radial außen her an den Außenumfang der Fluidleitung 8 angedrückt. Gleichzeitig tritt der Dichtungsring 46 mit dem Außenumfang der Fluidleitung 8 in Dichtkontakt. Da der Dichtungsring 46 außerdem auch mit der Innenumfangsfläche 39 der Aufnahmevertiefung 9 in Dichtkontakt steht, ergibt sich eine zur Umgebung hin fluiddichte Verbindung zwischen dem Fluidkanal 11 und dem Leitungskanal 7. Aufgrund der radialen Beaufschlagung durch die Haltevorsprünge 27 wird die bevorzugt aus einem Material mit gummielastischen Eigenschaften bestehende Fluidleitung 8 an einem unbeabsichtigten Herausziehen aus dem Anschlussstück 6 gehindert.

Soll die eingesteckte Fluidleitung 8 wieder entnommen werden, lässt sich von außen her manuell eine in der Montagerichtung 16 orientierte Betätigungskraft auf den Betätigungsabschnitt 42 des Löseelementes 36 ausüben, so dass selbiges nach axial innen verschoben wird und mit seinem Drückabschnitt 37 derart rückseitig auf die Haltevorsprünge 27 einwirkt, dass selbige vom Außenumfang der eingesteckten Fluidleitung 8 abgehoben werden. In diesem Zustand kann die Fluidleitung 8 ohne Beschädigungsgefahr wieder aus dem Anschlussstück 6 herausgezogen werden.

Zurückkommend auf die Verankerung der Montagebaugruppe 5 in der Aufnahmevertiefung 9, entspricht das bei der Ausführungsform der Figuren 1 bis 4 vorhandene Gehäuse 18 allgemein dem bei den Ausführungsbeispielen der Figuren 14 bis 19 vorhandenen Grundkörper, der das ringförmige Verankerungselement 4 trägt. Sofern im Folgenden anhand des Ausführungsbeispiels der Figuren 1 bis 4 im Zusammenhang mit dem ringförmigen Verankerungselement 4 von dem Gehäuse 18 die Rede ist, sollen die Erläuterungen entsprechend auch für den Grundkörper 19 und das daran fixierte ringförmige Verankerungselement 4 der anderen Ausführungsbeispiele gelten.

Das ringförmige Verankerungselement 4 ist ein bezüglich des Gehäuses 18 separates Bauteil und ist axial unbeweglich an dem Gehäuse 18 fixierbar oder fixiert. Im an dem Gehäuse 18 fixierten Zustand des Verankerungselementes 4 lässt sich mithin eine axial ortsfeste Fixierung des Gehäuses 18 bezüglich des zweiten Bauteils 3 allein dadurch realisieren, dass das ringförmige Verankerungselement 4 an dem zweiten Bauteil 3 fixiert wird.

Das ringförmige Verankerungselement 4 kann an dem Gehäuse 18 oder an einem anderen Abschnitt des ersten Bauteils 2 in grundsätzlich beliebiger Weise befestigt sein. Bei den Ausführungsbeispielen der Figuren 14 bis 19 ist in den Grundkörper 19 insbesondere dadurch teilweise eingebettet, dass der Grundkörper 19 durch Spritzgießen an dem Verankerungselement 4 appliziert wird. Das in Figuren 1 bis 4 illustrierte Ausführungsbeispiel zeigt eine besonders vorteilhafte Rastbefestigung, bei der das ringförmige Verankerungselement 4 axial mit dem Gehäuse 18 verrastet ist. Das Gehäuse 18 weist zu diesem Zweck an seinem Außenumfang eine radial nach außen offene und bezüglich der Längsachse 14 konzentrisch angeordnete Befestigungsnut 53 auf, in die das ringförmige Verankerungselement 4 mit einem der Verankerungszone 52 radial entgegengesetzten ringförmigen, inneren Befestigungsabschnitt 54 verrastend eingreift.

Die Befestigungsnut 53 befindet sich vorzugsweise am Außenumfang eines der Kanalmündung 12 zugeordneten rückseitigen Endabschnittes 32 des Gehäuses 18. Dieser Endabschnitt 32 kann axial im Anschluss an die Befestigungsnut 53 einen sich zum freien Ende hin konisch verjüngenden Montageabschnitt aufweisen, der ein koaxiales Aufschieben des als ununterbrochener, in sich geschlossener Ringkörper ausgebildeten ringförmigen Verankerungselementes 4 begünstigt.

Das ringförmige Verankerungselement 4 hat eine Mittellängsachse 55 und erstreckt sich in einer Umfangsrichtung 56 rings um diese Mittellängsachse 55 herum. Dadurch, dass es in der Umfangsrichtung 56 in sich geschlossen ist, verfügt es über eine sehr stabile Ringstruktur, die in der Lage ist, relativ große radiale Kräfte aufzubauen, die angestrebt sind, um die Montagebaugruppe 5 sicher in der Aufnahmevertiefung 9 zu verankern.

Wenn die Montagebaugruppe 5 gemäß Pfeil 16 in die Aufnahmevertiefung 9 eingepresst ist, führt jegliche entgegengesetzt zur Montagerichtung 16 auf das erste Bauteil 2 einwirkende Kraft dazu, dass sich das ringförmige Verankerungselement 4 mit seiner Verankerungszone 52 verstärkt in das Material des ihn umschließenden zweiten Bauteils 3 eindrückt und dadurch den Halt noch verstärkt.

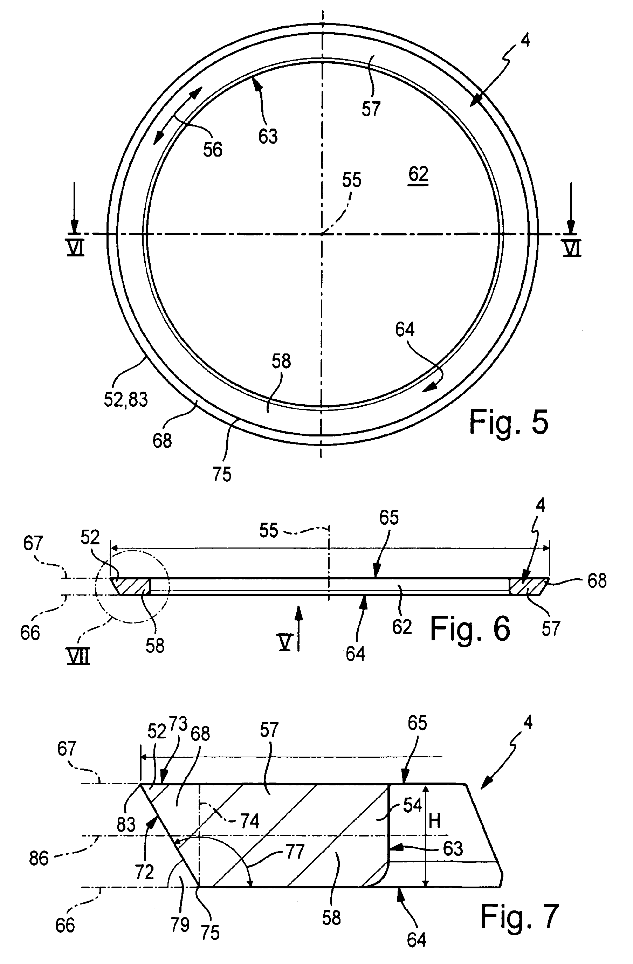

Im Folgenden sollen nun besonders vorteilhafte Ausführungsformen des ringförmigen Verankerungselementes 4 erläutert werden, und zwar insbesondere anhand der Figuren 5 bis 13. Soweit keine abweichenden Angaben gemacht werden, erstrecken sich die nachstehenden Ausführungen auf alle Ausführungsbeispiele.

Das nachstehend zur Vereinfachung auch nur als "Verankerungselement 4" bezeichnete ringförmige Verankerungselement 4 verfügt über einen sich konzentrisch um die Mittellängsachse 55 herum erstreckenden und in sich geschlossenen, in der Umfangsrichtung 56 ununterbrochenen Ringkörper 57. Dieser Ringkörper ist zweckmäßigerweise ein einstückiges Bauteil, das vorzugsweise aus Metall und insbesondere aus Edelstahl besteht. Das gesamte Verankerungselement 4 besteht zweckmäßigerweise ausschließlich aus diesem Ringkörper 57.

Der Ringkörper 57 hat eine mittige Ringöffnung 62. Um diese Ringöffnung 62 herum erstreckt sich in der Umfangsrichtung 56 ein zentraler Ringabschnitt 58 des Ringkörpers 57. Dieser zentrale Ringabschnitt 58 ist ringförmig ausgebildet und definiert den oben erwähnten Befestigungsabschnitt 54.

Durch den zentralen Ringabschnitt 58 wird eine nach radial innen orientierte Innenumfangsfläche 63 des Ringkörpers 57 definiert. Diese ist insbesondere kreiszylindrisch gestaltet. Der zentrale Ringabschnitt 58 hat zwei in Achsrichtung der Mittellängsachse 55 einander axial entgegengesetzt orientierte Stirnflächen, die im Folgenden als erste Stirnfläche 64 und zweite Stirnfläche 65 bezeichnet seien. Die erste Stirnfläche 64 erstreckt sich zweckmäßigerweise in einer ersten Radialebene 66, die zweite Stirnfläche 65 verläuft zweckmäßigerweise in einer zweiten Radialebene 67. Jede der beiden Radialebenen 66, 67 erstreckt sich rechtwinkelig zu der Mittellängsachse 55. Beide Stirnfläche 64, 65 sind vorzugsweise eben ausgebildet.

Durch den in Achsrichtung der Mittellängsachse 55 gemessenen Abstand zwischen den beiden Stirnflächen 64, 65 wird die maximale axiale Höhe (H) des Ringkörpers 57 definiert. Keinerlei Bestandteil des Ringkörpers 57 steht axial über die beiden Stirnflächen 64, 65 vor.

Radial außen an dem zentralen Ringabschnitt 58 weist der Ringkörper 57 einen radial nach außen abstehend angeordneten Verankerungszahn 68 auf. Der Verankerungszahn 68 erstreckt sich in der Umfangsrichtung 56 um die Mittellängsachse 55 herum und hat zwei schräg zueinander verlaufende Zahnflanken, die im Folgenden als erste Zahnflanke 72 und als zweite Zahnflanke 73 bezeichnet seien. Die beiden Zahnflanken 72, 73 konvergieren in Richtung zu der Verankerungszone 52, die den radial außen orientierten Scheitelbereich des Verankerungszahns 68 definiert.

Der zentrale Ringabschnitt 58 und der Verankerungszahn 68 gehen einstückig ineinander über. Nur zur Verdeutlichung ist in Figuren 7, 10 und 13 durch je eine strichpunktierte Linie bei 74 der Übergangsbereich zwischen dem zentralen Ringabschnitt 58 und dem Verankerungszahn 68 angedeutet.

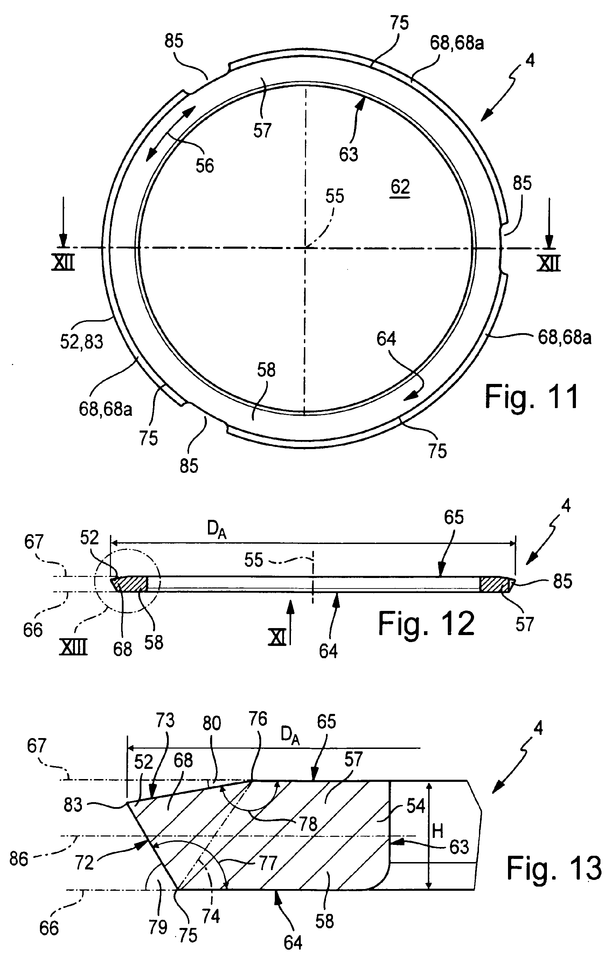

Bei den Ausführungsbeispielen der Figuren 5 bis 10 ist der Übergangsbereich 74 so gestaltet, dass der zentrale Ringabschnitt 58 im Wesentlichen einen rechteckigen Querschnitt hat, wobei die Ebene des Querschnitts von der Mittellängsachse 55 und einer hierzu radialen Achse aufgespannt wird. Beim Ausführungsbeispiel der Figur 13 hat der zentrale Ringabschnitt 58 im Wesentlichen einen trapezförmigen Querschnitt.

Der Verankerungszahn 68 erstreckt sich ausschließlich in dem zwischen den beiden Radialebenen 66, 67 befindlichen Bereich, wobei die Radialebenen 66, 67 jeweils eingeschlossen sind. Das ringförmige Verankerungselement 4 und mithin exemplarisch der Ringkörper 57 sind in vorteilhafter Weise als flache Ringscheibe ausgebildet, die mittig, unter Bildung der Ringöffnung 62, gelocht ist.

Die erste Zahnflanke 72 des Verankerungszahns 68 schließt sich über einen im Folgenden zur besseren Unterscheidung als erster Knick 75 bezeichneten Knick direkt an die erste Stirnfläche 64 des zentralen Ringabschnittes 58 an.

Zwischen der ersten Stirnfläche 64 und der ersten Zahnflanke 72 verläuft somit kein Absatz. Der Knick 75, der sich rings um die Mittellängsachse 55 herum erstreckt, ist praktisch von einer Kante mit bogenförmiger Längserstreckung gebildet.

Auch für die zweite Zahnflanke 73 gilt, dass sie sich zweckmäßigerweise absatzlos direkt radial außen an die zweite Stirnfläche 65 anschließt. Hierbei sind zwei Varianten möglich. Bei den Ausführungsbeispielen der Figuren 5 bis 10 ergibt sich nicht nur ein absatzloser, sondern ein zugleich auch knickloser Übergang zwischen der zweiten Stirnfläche 65 und der zweiten Zahnflanke 73. Exemplarisch bedeutet dies, dass die zweite Zahnflanke 73 sich wie die zweite Stirnfläche 65 in der zweiten Radialebene 67 erstreckt.

Bei der anderen, in Figuren 11 bis 13 illustrierten Gestaltungsvariante schließt sich die zweite Zahnflanke 73 absatzlos über einen im Folgenden zur besseren Unterscheidung als zweiter Knick 76 bezeichneten Knick direkt an die zweite Stirnfläche 65 des zentralen Ringabschnittes 58 an. Mithin entfernt sich die zweite Zahnflanke 73 ausgehend von dem zweiten Knick 76 in Richtung zur Verankerungszone 52 von der zweiten Radialebene 67, und zwar in Richtung zur ersten Radialebene 66.

Bei allen Ausführungsbeispielen gilt für die erste Zahnflanke 72, dass sie sich ausgehend von dem ersten Knick 75 in Richtung zu der Verankerungszone 52 von der ersten Radialebene 66 entfernt, und zwar in Richtung zur zweiten Radialebene 67.

Allen Ausführungsbeispielen ist gemeinsam, dass die Verankerungszone 52 zwischen den beiden Radialebenen 66, 67 liegt, wobei die Radialebenen 66, 67 selbst miteinbezogen sind.

Wie der erste Knick 75 ist auch der zweite Knick 76 als kreisbogenförmige Knicklinie zu verstehen, die sich in bezüglich der Mittellängsachse 55 konzentrischer Anordnung in der Umfangsrichtung 56 um die Mittellängsachse 55 herum erstreckt.

Die erste Stirnfläche 64 und die erste Zahnflanke 72 schließen zweckmäßigerweise einen ersten Winkel 77 ein, der, je einschließlich, zwischen 100° und 140° liegt. Die Winkelmessung erfolgt hierbei auf der der zweiten Stirnfläche 65 zugewandten Seite, also im Innern des Ringkörpers 57. Bevorzugt wird ein erster Winkel 77 in der Größenordnung von 120°. Anders ausgedrückt ergibt sich somit außen zwischen der ersten Zahnflanke 72 und der nach radial außen über die erste Stirnfläche 64 hinaus verlängerten ersten Radialebene 66 ein erster Schrägwinkel 79, der zwischen 40° und 80° und vorzugsweise im Bereich von 60° liegt.

Wenn die zweite Zahnflanke 73 einen schrägen Verlauf bezüglich der zweiten Stirnfläche 65 aufweist, beträgt der dazwischen gemessene, im Folgenden als zweiter Winkel 78 bezeichnete Winkel zweckmäßigerweise - je einschließlich - 175° bis 150° und liegt vorzugsweise im Bereich von 170°. Die Winkelmessung erfolgt hierbei im Innern des Ringkörpers 57 auf der der ersten Stirnfläche 64 zugewandten Seite.

Anders ausgedrückt liegt hierbei außen zwischen der zweiten Stirnfläche 65 und der über den zweiten Knick 76 hinaus verlängerten zweiten Radialebene 67 ein zweiter Schrägwinkel 80 vor, der zwischen 5° und 30° und insbesondere im Bereich von 10° liegt.

Im Bereich jeder bezüglich einer Radialebene 66 oder 67 schrägen Zahnflanke 72, 73 ist das Verankerungselement 4 insbesondere konisch gestaltet.

Bei den Ausführungsbeispielen der Figuren 5 bis 7 und Figuren 11 bis 13 konvergieren die beiden Zahnflanken 72, 73 nach radial außen, bis sie sich in einer bevorzugt scharfkantigen Verankerungskante 83 treffen, die bei diesen Ausführungsbeispielen die Verankerungszone 52 definiert. Eine solche Verankerungskante 83 ist optimal dafür prädestiniert, in die Wandung der Aufnahmevertiefung 9 zur Verankerung einzudringen.

Insbesondere dann, wenn das Material des zweiten Bauteils 3, in das das Verankerungselement 4 einzupressen ist, verhältnismäßig hart ist, kann es empfehlenswert sein, von einer scharfen Verankerungskante 83 abzusehen und die Verankerungszone 52 stattdessen mit einer bezüglich der Mittellängsachse 55 radial nach außen orientierten, kreiszylindrisch konturierten Randfläche 84 zu versehen. Somit erstrecken sich die beiden Zahnflanken 72, 73 nicht bis zu einem unmittelbaren Treffpunkt, sondern enden kurz vorher derart, dass zwischen ihren Endbereichen ein kleiner axialer Abstand in Achsrichtung der Mittellängsachse 55 vorliegt, der die kreiszylindrische Randfläche 84 definiert. Ein Verankerungszahn 68, der in seiner Verankerungszone 52 radial außen derart abgeflacht ist, erweist sich beim Einpressen in das zweite Bauteil 3 als besonders widerstandsfähig.

Die in Achsrichtung der Mittellängsachse 55 gemessene Höhe (h) der kreiszylindrischen Randfläche 84 des Verankerungszahns 68 beträgt zweckmäßigerweise maximal 0,05 mm. Zusätzlich oder alternativ beläuft sich diese Höhe (h) der Randfläche 84 des Verankerungszahns 68 auf maximal 20 % der in Achsrichtung der Mittellängsachse 55 gemessenen Höhe (H) des zentralen Ringabschnittes 58.

Hinsichtlich der in Achsrichtung der Mittellängsachse 55 gemessenen Höhe (H) des zentralen Ringabschnittes 58 hat es sich als zweckmäßig erwiesen, wenn sie maximal 20 % des Außendurchmessers (D_{A}) des Ringkörpers 57 beträgt. Dieser Außendurchmesser (D_{A}) ist exemplarisch zugleich der Außendurchmesser der Verankerungszone 52.

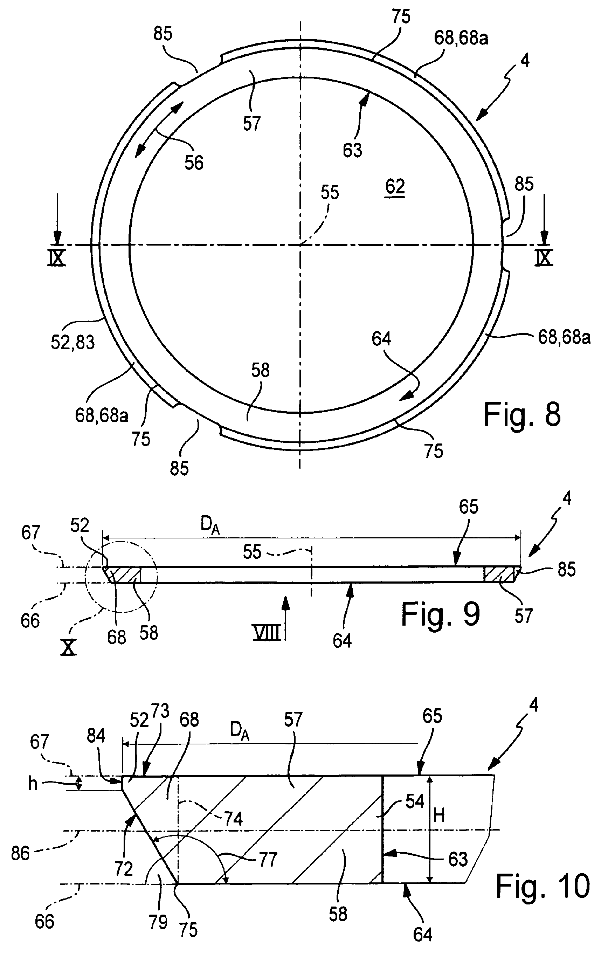

Der Verankerungszahn 68 kann um die Mittellängsachse 55 herum in sich geschlossen sein und keinerlei Unterbrechung aufweisen. Eine solche Bauform ist anhand Figuren 5 bis 7 illustriert. Hiervon abweichend kann der einzige Verankerungszahn 68 aber auch in mehrere in der Umfangsrichtung 56 der Mittellängsachse 55 zueinander beabstandete Zahnsegmente 68a unterteilt sein, wie dies bei den Ausführungsbeispielen der Figuren 8 bis 13 der Fall ist. Hier befindet sich zwischen in der Umfangsrichtung 56 jeweils unmittelbar aufeinanderfolgenden Zahnsegmenten 68a ein Zwischenraum 85, der zur Folge hat, dass die Verankerungszone 52 mehrfach unterbrochen ist.

Zweckmäßigerweise ist die Summe der in der Umfangsrichtung 56 gemessenen Längenabmessungen sämtlicher vorhandener Zahnsegmente 68a gleich oder größer als die Summe der entsprechend gemessenen Längenabmessungen der einzelnen Zwischenräume 85.

Das Verankerungselement 4 ist zweckmäßigerweise mit derartiger Ausrichtung am ersten Bauteil 2 angeordnet, dass die erste Stirnfläche 64 in der Montagerichtung 16 orientiert ist. Auf diese Weise dringt das Verankerungselement 4 mit vorauseilender erster Zahnflanke 72 in die Aufnahmevertiefung bzw. Öffnung 9 ein. Hierbei ist die oben geschilderte Ausgestaltung des ersten Winkels 77 von Vorteil.

Wenn der Verankerungszahn 68 in der Umfangsrichtung 56 ununterbrochen ist, ist jeder der beiden Knicke 75, 76 von einer kreisförmigen Knicklinie gebildet. Bei in der Umfangsrichtung 56 unterbrochenem Verankerungszahn 68 setzt sich jeder Knick 75, 76 aus mehreren mit Abstand aufeinanderfolgenden kreisbogenförmigen Knicklinien zusammen.

Bezogen auf eine mittlere Radialebene 86, die den Ringkörper 57 höhenmittig durchquert - also in der Mitte der maximalen axialen Höhe (H) -, ist der Verankerungszahn 68 zweckmäßigerweise so gestaltet, dass seine Verankerungszone 52 ausschließlich auf der der zweiten Radialebene 67 zugewandten Seite der mittleren Radialebene 86 liegt. Entweder liegt die Verankerungszone 52 hierbei zwischen der mittleren Radialebene 86 und der zweiten Radialebene 67 oder sie liegt direkt auf der zweiten Radialebene 67. Jedenfalls steht sie axial nicht über die zweiten Radialebene 67 vor.

Jeder Knick 75, 76 ist so gestaltet, dass die sich dort an eine Stirnfläche 64 oder 65 anschließende Zahnflanke 72, 73 schräg in Richtung zu derjenigen Radialebene 66 oder 67 verläuft, in der sich die der jeweils anderen Zahnflanke 73, 72 zugeordnete Stirnfläche 65, 64 erstreckt.

## Patentansprüche

1. Fluidtechnische Baugruppe, mit mindestens einer Montagebaugruppe (5) bestehend aus einem in einer Öffnung eines Fluidkanals (11) eines zweiten Bauteils (3) der fluidtechnischen Baugruppe (1) fixierbaren ersten Bauteil (2) und einem an dem ersten Bauteil (2) fixierten, durch Einpressen in der Öffnung des Fluidkanals (11) verankerbaren ringförmigen Verankerungselement (4), das über einen sich konzentrisch um eine Mittellängsachse (55) herum erstreckenden und in sich geschlossenen Ringkörper (57) verfügt, der einen zentralen Ringabschnitt (58) mit zwei einander axial entgegengesetzt orientierten und die maximale axiale Höhe (H) des Ringkörpers (57) definierenden ersten und zweiten Stirnflächen (64, 65) sowie einen radial außen an dem zentralen Ringabschnitt (58) radial abstehend angeordneten und sich in dem zwischen den beiden Stirnflächen (64, 65) liegenden Bereich um den zentralen Ringabschnitt (58) herum erstreckenden Verankerungszahn (68) mit zwei zueinander schrägen ersten und zweiten Zahnflanken (72, 73) aufweist, **dadurch gekennzeichnet, dass** das ringförmige Verankerungselement (4) als flache Ringscheibe ausgebildet ist, wobei sich die erste Zahnflanke (72) des Verankerungszahns (68) über einen Knick (75) absatzlos direkt an die erste Stirnfläche (64) des zentralen Ringabschnittes (58) anschließt.

2. Fluidtechnische Baugruppe nach Anspruch 1, **dadurch gekennzeichnet, dass** sich die beiden Stirnflächen (64, 65) des zentralen Ringabschnittes (58) jeweils in einer bezüglich der Mittellängsachse (55) rechtwinkeligen Radialebene (66, 67) erstrecken.

3. Fluidtechnische Baugruppe nach Anspruch 1 oder 2, **dadurch gekennzeichnet, dass** der auf der zur zweiten Stirnfläche (65) weisenden Seite gemessene Winkel (77) zwischen der ersten Stirnfläche (64) des zentralen Ringabschnittes (58) und der ersten Zahnflanke (72) des Verankerungszahns (68) je einschließlich zwischen 100° und 140° und vorzugsweise im Bereich von 120° liegt.

4. Fluidtechnische Baugruppe nach einem der Ansprüche 1 bis 3, **dadurch gekennzeichnet, dass** sich die zweite Zahnflanke (73) absatzlos direkt an die zweite Stirnfläche (65) des zentralen Ringabschnittes (58) anschließt.

5. Fluidtechnische Baugruppe nach einem der Ansprüche 1 bis 4, **dadurch gekennzeichnet, dass** sich die zweite Zahnflanke (73) absatz- und knicklos direkt an die zweite Stirnfläche (65) des zentralen Ringabschnittes (58) anschließt und sich zweckmäßigerweise gemeinsam mit dieser zweiten Stirnfläche (65) in ein und derselben Radialebene (67) erstreckt.

6. Fluidtechnische Baugruppe nach einem der Ansprüche 1 bis 5, **dadurch gekennzeichnet, dass** sich die zweite Zahnflanke (73) des Verankerungszahns (68) über einen Knick (76) direkt an die zweite Stirnfläche (65) des zentralen Ringabschnittes (58) anschließt.

7. Fluidtechnische Baugruppe nach Anspruch 6, **dadurch gekennzeichnet, dass** der auf der zur ersten Stirnfläche (64) weisenden Seite gemessene Winkel zwischen der zweiten Stirnfläche (65) und der zweiten Zahnflanke (73) je einschließlich zwischen 175° und 150° und vorzugsweise im Bereich von 170° liegt.

8. Fluidtechnische Baugruppe nach einem der Ansprüche 1 bis 7, **dadurch gekennzeichnet, dass** sich die beiden Zahnflanken (72, 73) in einer radial außen liegenden Verankerungszone (52) unter Bildung einer bevorzugt scharfkantigen Verankerungskante (83) des Verankerungszahns (68) treffen.

9. Fluidtechnische Baugruppe nach einem der Ansprüche 1 bis 7, **dadurch gekennzeichnet, dass** der Verankerungszahn (68) in einer radial außen liegenden Verankerungszone (52) eine zur Mittellängsachse (55) konzentrische, kreiszylindrisch konturierte Randfläche (84) aufweist, an die sich axial beidseits jeweils eine der beiden Zahnflanken (72, 73) anschließt.

10. Fluidtechnische Baugruppe nach Anspruch 9, **dadurch gekennzeichnet, dass** die in Achsrichtung der Mittellängsachse (55) gemessene Höhe (h) der Randfläche (84) des Verankerungszahns (68) maximal 0,05 mm und/oder maximal 20 % der in Achsrichtung der Mittellängsachse (55) gemessenen Höhe (H) des zentralen Ringabschnittes (58) beträgt.

11. Fluidtechnische Baugruppe nach einem der Ansprüche 1 bis 10, **dadurch gekennzeichnet, dass** die in Achsrichtung der Mittellängsachse (55) gemessene Höhe (H) des zentralen Ringabschnittes (58) maximal 20 % des Außendurchmessers (D_{A}) des Ringkörpers (57) beträgt.

12. Fluidtechnische Baugruppe nach einem der Ansprüche 1 bis 11, **dadurch gekennzeichnet, dass** der Verankerungszahn (68) um die Mittellängsachse (55) herum in sich geschlossen ist oder in mehrere in der Umfangsrichtung (56) der Mittellängsachse (55) zueinander beabstandete Zahnsegmente (68a) unterteilt ist.

13. Fluidtechnische Baugruppe nach einem der Ansprüche 1 bis 12, **dadurch gekennzeichnet, dass** der Ringkörper (57) aus Metall und insbesondere aus Edelstahl besteht.

14. Fluidtechnische Baugruppe nach einem der Ansprüche 1 bis 13, **dadurch gekennzeichnet, dass** sich die beiden die maximale axiale Höhe (H) des Ringkörpers (57) definierenden Stirnflächen (64, 65) des zentralen Ringabschnittes (58) jeweils in einer bezüglich der Mittellängsachse (55) rechtwinkeligen Radialebene (66, 67) erstrecken, wobei sich der Verankerungszahn (68), jeweils einschließlich der jeweiligen Radialebene (66, 67), ausschließlich in dem zwischen den beiden Radialebenen (66, 67) befindlichen Bereich erstreckt.

15. Fluidtechnische Baugruppe nach einem der Ansprüche 1 bis 14, **dadurch gekennzeichnet, dass** das erste Bauteil (2) ein zum Anschließen einer Fluidleitung (8) dienendes Anschlussstück (6) oder ein zum Verschließen des Fluidkanals (11) dienender Blindstopfen (6a) oder ein Drosseleinsatz (6b) oder ein Manometer (6c) ist.

16. Fluidtechnische Baugruppe nach einem der Ansprüche 1 bis 15, **dadurch gekennzeichnet, dass** das zweite Bauteil zumindest im Bereich der Öffnung aus einem Kunststoffmaterial besteht.

## Claims

1. Fluid power assembly, comprising at least one mounting unit (5) consisting of a first component (2), which can be secured in an opening of a fluid passage (11) of a second component (3) of the fluid power assembly (1), and an annular anchoring element (4), which is secured to the first component (2) and can be anchored by pressing into the opening of the fluid passage (11) and which comprises a self-contained annular body (57), which concentrically extends around a central longitudinal axis (55) and which comprises a central annular section (58) with two first and second end faces (64, 65) oriented axially opposite each other and defining the maximum axial height (H) of the annular body (57) and an anchoring tooth (68) with two first and second tooth flanks (72, 73) oriented at an angle to each other, which anchoring tooth (68) extends radially outwards from the central annular section (58) and extends around the central annular section (58) in the region lying between the two end faces (64, 65), **characterised in that** the annular anchoring element (4) is designed as a flat annular disc, wherein the first tooth flank (72) of the anchoring tooth (68) directly adjoins the first end face (64) of the central annular section (58) without an offset via a kink (75).

2. Fluid power assembly according to claim 1, **characterised in that** each of the two end faces (64, 65) of the central annular section (58) extends in a radial plane (66, 67) perpendicular to the central longitudinal axis (55).

3. Fluid power assembly according to claim 1 or 2, **characterised in that** the angle (77) between the first end face (64) of the central annular section (58) and the first tooth flank (72) of the anchoring tooth (68), as measured on the side facing the second end face (65), is 100 degrees to 140 degrees inclusive, being preferably in the range of 120 degrees.

4. Fluid power assembly according to any of claims 1 to 3, **characterised in that** the second tooth flank (73) directly adjoins the second end face (65) of the central annular section (58) without an offset.

5. Fluid power assembly according to any of claims 1 to 4, **characterised in that** the second tooth flank (73) adjoins the second end face (65) of the central annular section (58) without an offset or a kink and expediently extends in one and the same radial plane (67) together with this second end face (65).

6. Fluid power assembly according to any of claims 1 to 5, **characterised in that** the second tooth flank (73) of the anchoring tooth (68) directly adjoins the second end face (65) of the central annular section (58) via a kink (76).

7. Fluid power assembly according to claim 6, the angle between the second end face (65) and the second tooth flank (73), as measured on the side facing the first end face (64), is 175 degrees to 150 degrees inclusive, being preferably in the range of 170 degrees.

8. Fluid power assembly according to any of claims 1 to 7, **characterised in that** the two tooth flanks (72, 73) meet in a radially outward anchoring zone (52) while forming a preferably sharp-edged anchoring edge (83) of the anchoring tooth (68).

9. Fluid power assembly according to any of claims 1 to 7, **characterised in that** the anchoring tooth (68) has, in a radially outward anchoring zone (52), an edge surface (84) concentric with the central longitudinal axis (55) and having a circular cylindrical contour, which edge surface (84) is axially adjoined on either side by one of the two tooth flanks (72, 73).

10. Fluid power assembly according to claim 9, **characterised in that** the height (h) of the edge surface (84) of the anchoring tooth (68), as measured in the axial direction of the central longitudinal axis (55), is maximally 0.05 mm and/or maximally 20% of the height (H) of the central annular section (58) as measured in the axial direction of the central longitudinal axis (55).

11. Fluid power assembly according to any of claims 1 to 10, **characterised in that** the height (H) of the central annular section (58), as measured in the axial direction of the central longitudinal axis (55), is maximally 20% of the outer diameter (D_{A}) of the annular body (57).

12. Fluid power assembly according to any of claims 1 to 11, **characterised in that** the anchoring tooth (68) is coherent about the central longitudinal axis (55) or divided into a plurality of tooth segments (68a) arranged at a distance from one another in the circumferential direction (56) of the central longitudinal axis (55).

13. Fluid power assembly according to any of claims 1 to 12, **characterised in that** the annular body (57) is made of metal and in particular of stainless steel.

14. Fluid power assembly according to any of claims 1 to 13, **characterised in that** the two end faces (64, 67) of the central annular section (58), which define the maximum axial height (H) of the annular body (57), extend in a radial plane (66, 67) which is perpendicular relative to the central longitudinal axis (55), the anchoring tooth (68), in each case including the respective radial plane (66, 67), extending exclusively in the region between the two radial planes (66, 67).

15. Fluid power assembly according to any of claims 1 to 14, **characterised in that** the first component (2) is a connecting piece (6) used for connecting a fluid line (8) or a dummy plug (6a) or a restrictor insert (6b) or a pressure gauge (6c).

16. Fluid power assembly according to any of claims 1 to 15, **characterised in that** the second component is made of a plastic material at least in the region of the opening.

## Revendications

1. Module de technique des fluides, comprenant au moins un module de montage (5) constitué d'un premier composant (2) pouvant être fixé dans une ouverture d'un canal de fluide (11) d'un deuxième composant (3) du module de technique des fluides (1) et d'un élément d'ancrage (4) de forme annulaire fixé au niveau du premier composant (2), pouvant être ancré par enfoncement dans l'ouverture du canal de fluide (11), lequel élément d'ancrage dispose d'un corps annulaire (57) s'étendant de manière concentrique tout autour d'un axe longitudinal médian (55) et fermé en soi, lequel corps annulaire présente une section annulaire (58) centrale pourvue de deux, une première et une seconde, surfaces frontales (64, 65) orientées de manière axialement opposée l'une par rapport à l'autre et définissant la hauteur axiale (H) maximale du corps annulaire (57) ainsi qu'une dent d'ancrage (68) disposée à l'extérieur radialement au niveau de la section annulaire (58) centrale de manière à faire saillie radialement et s'étendant dans la zone située entre les deux surfaces frontales (64, 65) tout autour de la section annulaire (58) centrale, pourvue de deux, un premier et un second, flancs de dent (72, 73) obliques l'un par rapport à l'autre, **caractérisé en ce que** l'élément d'ancrage (4) de forme annulaire est réalisé sous la forme d'un disque annulaire plat, sachant que le premier flanc de dent (72) de la dent d'ancrage (68) se raccorde, sans retrait par l'intermédiaire d'un coude (75), directement à la première surface frontale (64) de la section annulaire (58) centrale.

2. Module de technique des fluides selon la revendication 1, **caractérisé en ce que** les deux surfaces frontales (64, 65) de la section annulaire (58) centrale s'étendent respectivement dans un plan radial (66, 67) rectangulaire par rapport à l'axe longitudinal médian (55).

3. Module de technique des fluides selon la revendication 1 ou 2, **caractérisé en ce que** l'angle (77) mesuré sur le côté pointant en direction de la seconde surface frontale (65) entre la première surface frontale (64) de la section annulaire (58) centrale et le premier flanc de dent (72) de la dent d'ancrage (68) y compris respectivement présente une valeur comprise entre 100° et 140° et, de préférence, une valeur de l'ordre de 120°.

4. Module de technique des fluides selon l'une quelconque des revendications 1 à 3, **caractérisé en ce que** le second flanc de dents (73) se raccorde sans retrait directement à la seconde surface frontale (65) de la section annulaire (58) centrale.

5. Module de technique des fluides selon l'une quelconque des revendications 1 à 4, **caractérisé en ce que** le second flanc de dent (73) se raccorde sans retrait et sans coude directement à la seconde surface frontale (65) de la section annulaire (58) centrale et s'étend de manière appropriée conjointement avec ladite seconde surface frontale (65) dans un seul et même plan radial (67).

6. Module de technique des fluides selon l'une quelconque des revendications 1 à 5, **caractérisé en ce que** le second flanc de dent (73) de la dent d'ancrage (68) se raccorde, par l'intermédiaire d'un coude (76), directement à la seconde surface frontale (65) de la section annulaire (58) centrale.

7. Module de technique des fluides selon la revendication 6, **caractérisé en ce que** l'angle mesuré sur le côté pointant en direction de la première surface frontale (64) entre la seconde surface frontale (65) et le second flanc de dent (73) y compris respectivement présente une valeur comprise entre 175° et 150° et, de préférence, une valeur de l'ordre de 170°.

8. Module de technique des fluides selon l'une quelconque des revendications 1 à 7, **caractérisé en ce que** les deux flancs de dent (72, 73) se rencontrent dans une zone d'ancrage (52) située à l'extérieur radialement en formant une arête d'ancrage (83) de manière préférée à arêtes vives de la dent d'ancrage (68).

9. Module de technique des fluides selon l'une quelconque des revendications 1 à 7, **caractérisé en ce que** la dent d'ancrage (68) présente, dans une zone d'ancrage (52) située à l'extérieur radialement, une surface de bord (84) concentrique par rapport à l'axe longitudinal médian (55), à contour cylindrique circulaire, à laquelle se raccorde axialement de part et d'autre respectivement un des deux flancs de dent (72, 73).

10. Module de technique des fluides selon la revendication 9, **caractérisé en ce que** la hauteur (h), mesurée dans le sens axial de l'axe longitudinal médian (55), de la surface de bord (84) de la dent d'ancrage (68) est égale au maximum à 0,05 mm et/ou au maximum à 20 % de la hauteur (H), mesurée dans le sens axial de l'axe longitudinal médian (55), de la section annulaire (58) centrale.

11. Module de technique des fluides selon l'une quelconque des revendications 1 à 10, **caractérisé en ce que** la hauteur (H), mesurée dans le sens axial de l'axe longitudinal médian (55), de la section annulaire (58) centrale est égale au maximum à 20 % du diamètre extérieur (D_{A}) du corps annulaire (57).

12. Module de technique des fluides selon l'une quelconque des revendications 1 à 11, **caractérisé en ce que** la dent d'ancrage (68) est en soi fermée tout autour de l'axe longitudinal médian (55) ou est divisée en plusieurs segments de dent (68a) espacés les uns par rapport aux autres dans le sens de la périphérie (56) de l'axe longitudinal médian (55).

13. Module de technique des fluides selon l'une quelconque des revendications 1 à 12, **caractérisé en ce que** le corps annulaire (57) est constitué de métal et, en particulier, d'acier inoxydable.

14. Module de technique des fluides selon l'une quelconque des revendications 1 à 13, **caractérisé en ce que** les deux surfaces frontales (64, 65), définissant la hauteur (H) axiale maximale du corps annulaire (57), de la section annulaire (58) centrale s'étendent respectivement dans un plan radial (66, 67) rectangulaire par rapport à l'axe longitudinal médian (55), sachant que la dent d'ancrage (68), y compris respectivement du plan radial (66, 67) respectif, s'étend exclusivement dans la zone se trouvant entre les deux plans radiaux (66, 67).

15. Module de technique des fluides selon l'une quelconque des revendications 1 à 14, **caractérisé en ce que** le premier composant (2) est une pièce de raccordement (6) servant à raccorder un conduit de fluide (8) ou un bouchon borgne (6a) servant à fermer le canal de fluide (11) ou un insert d'étranglement (6b) ou un manomètre (6c).

16. Module de technique des fluides selon l'une quelconque des revendications 1 à 15, **caractérisé en ce que** le deuxième composant est constitué, au moins dans la zone de l'ouverture, d'un matériau en matière plastique.
